# EUROPEAN PATENT SPECIFICATION

(11) **EP 2 763 427 B1**
(45) Date of publication and mention of the grant of the patent: **10.01.2018**
(21) Application number: 11872894.8
(22) Date of filing: 10.11.2011
(51) Int. Cl.: H04N 21/4408, G06Q 50/00

(54) **SYSTEM AND METHOD FOR PROVIDING CONTENT-ASSOCIATED INFORMATION ASSOCIATED WITH BROADCAST CONTENT**
SYSTEM UND VERFAHREN ZUR BEREITSTELLUNG VON MIT RUNDFUNKINHALTEN ASSOZIIERTEN INFORMATIONEN
SYSTÈME ET PROCÉDÉ POUR FOURNIR DES INFORMATIONS ASSOCIÉES À DU CONTENU QUI SONT ASSOCIÉES À UN CONTENU DE DIFFUSION

(30) Priority: 26.09.2011 KR 20110096955
(43) Date of publication of application: 06.08.2014
(73) Proprietor: Enswers Co., Ltd., Seoul 100-741 (KR)
(72) Inventor: LEE, Jaehyung, Yongin-si Gyeonggi-do 448-537 (KR); LEE, Joon-pyo, Seoul 140-100 (KR)
(74) Representative: Taor, Simon Edward William
(86) International application number: PCT/KR2011/008564
(87) International publication number: WO 2013/047948

(56) References cited:
- EP-A1- 2 012 541
- WO-A1-2011/032167
- WO-A2-2010/022000
- KR-A- 20040 108 796
- KR-A- 20070 104 614
- KR-A- 20100 039 950

## Description

### Technical Field

The present invention relates, in general, to a system and method for providing content-related information related to broadcast content and, more particularly, to a system and method that provide in real time various types of information related to broadcast content to a client terminal, which is playing broadcasts, over a network, such as the Internet.

### Background Art

Recently, there has been proposed a device, such as a so-called "SMART TV(smart Television)", which enables a network connection function or the like to be included in a device, such as a conventional TV for receiving broadcasts, and allows Internet services to be provided. Since a device, such as a smart TV, is capable of not only receiving broadcasts, but also providing Internet services and enabling applications to be downloaded and executed, the device can actually be regarded as a kind of device in which a TV is integrated with a computer. Such a device having a broadcast reception function and an Internet service provision function in this way may include a mobile communication terminal having a Digital Multimedia Broadcasting (DMB) reception function and a computer for performing an Internet streaming broadcasting service, as well as a smart TV. In this way, there has been required a method capable of providing information related to broadcast content in an interactive manner using a device capable of simultaneously performing broadcasting and a network service.

However, in this method, it is difficult to determine in real time which broadcast a user is watching, that is, which broadcast a client terminal is playing, and to determine in real time which broadcast content is being played during the broadcast, within a short period of time, so it is very difficult to provide information related to a broadcast a user is watching to the user in an interactive manner. In relation to this problem, when fingerprint
information based on audio or video signals is used, it can be easily determined which broadcast is being watched by a user, and so methods using fingerprint information are required.

With regard to this, Korean Unexamined Patent Application Publication No. 10-2011-0010084 (Date of Publication: January 31, 2011) filed by the present applicant discloses a method of providing a service related to content using fingerprint information. This patent discloses a method and apparatus, which receive a content-related information request signal, including partial fingerprint information corresponding to at least one section of content currently being played on a client terminal from the client terminal, search a content database (DB) for content-related information about the corresponding content based on the received partial fingerprint information, and transmit content-related service information, which is generated based on the found content-related information about the content, to the client terminal. However, this method is limited in that content-related information can be provided only when fingerprint information is received first from the client terminal.

Further, Korean Patent Application No. 10-2011-0038353 filed by the present applicant discloses a method of providing in real time advertisement-related information to a client terminal using fingerprint information. However, this technology is disadvantageous in that there are many cases where a broadcast channel is changed while a client terminal is playing a broadcast, and, in this case, a period at which the terminal identifies the broadcast channel must be set as a very short period in order to consider in real time information about whether the channel has changed, thus resulting in the limitation of causing a large load on a channel identification server.

WO2010022000 discloses technology that identifies media and provides a user with supplemental information (e.g., supplemental media, a selectable link, etc.) based on the identity of the media.

WO2011032167 discloses a method for interpreting messages, user-defined alert conditions, voice commands and performing an action in response.

### Disclosure

### Technical Problem

Accordingly, the present invention has been made keeping in mind the above problems, and an object of the present invention is to provide a system and method that can provide in real time various types of information related to broadcast content to a client terminal, which is provided with a broadcast reception means and a network connection means and which plays the corresponding broadcast, while playing the broadcast, and that can
lengthen a period at which the channel information of a broadcast being played on the client terminal is identified, thus greatly reducing a load on a channel information identification server.

Another object of the present invention is to provide a method and system that can provide in real time content-related information based on respective situations in response to command input signals from a manager during the provision of a broadcast, to a client terminal which is playing the corresponding broadcast.

A further object of the present invention is to provide an information provision method and system that allow a user who receives broadcast content-related information to carry out an additional operation, so that secondary consumer interaction activities, such as product purchasing and information obtainment, can be increased, thus improving information provision efficiency by encouraging the user's interactive participation, and that can exactly determine in real time whether broadcast content is being played by using fingerprint information, thus further improving efficiency.

### Technical Solution

In order to accomplish the above objects, the present invention provides a system for providing content-related information, the system providing content-related information related to broadcast content provided to a client terminal having a display unit, broadcast reception means, and network connection means through a broadcast channel, including a content-related information management unit for storing content-related information to be provided to the client terminal; a fingerprint extraction unit for extracting fingerprint information from broadcast content to be provided through the broadcast channel; a content-related information provision determination unit for determining content-related information to be provided to the client terminal; and a content-related information transmission unit for transmitting the content-related information determined by the content-related information provision determination unit and fingerprint information extracted from broadcast content corresponding to the determined content-related information to the client terminal over a network, wherein the client terminal includes a content-related information display unit for performing control such that the received content-related information is displayed on a display unit based on the fingerprint information received from the content-related information transmission unit.

In this case, the content-related information of the content-related information management unit may be stored in correspondence with previously designated broadcast content, and the content-related information provision determination unit may be configured to, if the designated broadcast content is played during the broadcast provided through the broadcast channel, determine the content-related information stored in correspondence with the designated broadcast content to be content-related information to be provided to the client terminal.

Further, the content-related information determination unit may determine the content-related information to be provided to the client terminal in response to a user input signal.

Furthermore, the fingerprint information transmitted from the content-related information transmission unit to the client terminal may be fingerprint information about at least a part of the broadcast content corresponding to the content-related information determined by the content-related information provision determination unit.

Furthermore, the fingerprint information may be fingerprint information falling within a predetermined time period ranging from a starting point of the broadcast content corresponding to the content-related information determined by the content-related information provision determination unit.

In addition, the client terminal may further include a fingerprint extraction unit for extracting fingerprint information from broadcast content received thereby, and the content-related information display unit may perform control such that the fingerprint information received from the content-related information transmission unit is compared with the fingerprint information extracted by the fingerprint extraction unit, and such that when the pieces of fingerprint information are identical to each other, the received content-related information is displayed on the display unit.

Furthermore, the content-related information display unit may store pieces of fingerprint information of the client terminal for a preset time period, and may perform control such that if there is an identical portion between the fingerprint information received from the content-related information transmission unit and the stored fingerprint information, the received content-related information is displayed on the display unit.

In addition, the client terminal may further include a broadcast channel identification unit for obtaining identification information about a broadcast channel on which the client terminal is currently receiving a broadcast through the broadcast reception means.

Furthermore, the broadcast channel identification unit of the client terminal may extract fingerprint information from a broadcast received through the broadcast reception means, and transmits the extracted fingerprint information to a channel information identification server, the channel information identification server may identify channel information about the broadcast currently being received by the client terminal based on the fingerprint information received from the broadcast channel identification unit of the client terminal, and transmits the identified channel information to the client terminal, and the broadcast channel identification unit of the client terminal may obtain identification information about the broadcast channel on which the client terminal is receiving the broadcast, based on the channel information about the broadcast received from the channel information identification server.

Furthermore, the content-related information transmission unit may transmit broadcast channel identification information about broadcast content corresponding to the content-related information determined by the content-related information provision determination unit, together with the content-related information and the fingerprint information to the client terminal, and the content-related information display unit of the client terminal may perform control such that, if the received broadcast channel identification information is identical to the broadcast channel identification information obtained by the broadcast channel identification unit, the received content-related information is displayed on the display unit based on the fingerprint information received from the content-related information transmission unit.

Furthermore, the broadcast channel identification unit of the client terminal may transmit the broadcast channel identification information to the content-related information transmission unit, and the content-related information transmission unit of the system for providing content-related information may identify a client terminal which is playing the broadcast content corresponding to the content-related information determined by the content-related information provision determination unit, based on the broadcast channel identification information received from the client terminal, and transmit the determined content-related information and the fingerprint information to the identified client terminal.

Furthermore, the content-related information transmission unit of the system may transmit a broadcast channel identification request signal required to determine whether broadcast content corresponding to the determined content-related information is being played, to the client terminal connected thereto, and the broadcast channel identification unit of the client terminal may transmit the broadcast channel identification information to the content-related information transmission unit in response to the broadcast channel identification request signal.

Furthermore, the channel information identification server may be included in the system for providing content-related information.

Furthermore, the content-related information management unit may store pieces of fingerprint information about the previously designated broadcast content together with content-related information so that the pieces of fingerprint information correspond to respective pieces of designated broadcast content, and the content-related information provision determination unit may compare fingerprint information about broadcast content provided through each broadcast channel with the pieces of fingerprint information corresponding to the pieces of broadcast content, previously stored in the content-related information management unit, and then determine whether the broadcast content stored in the content-related information management unit is being played.

In addition, the client terminal may further include a user information processing unit for receiving a user input signal based on the displayed content-related information, and transmitting an additional operation request signal based on the received input signal to the system or a separate external device.

Furthermore, the broadcast channel identification unit of the client terminal may transmit time information together while transmitting the fingerprint information to the channel information identification server, and the channel information identification server may compare absolute time information of the system for providing content-related information with the time information received from the client terminal, obtain information about a time offset between broadcast pictures of the client terminal and the system for providing content-related information, and transmit the time offset information to the client terminal.

Furthermore, the content-related information transmission unit may transmit the absolute time information, together with the content-related information, to the client terminal, and the client terminal may display the content-related information based on the received absolute time information and the time offset information between the broadcast pictures.

In accordance with another aspect of the present invention, there can be provided a method of providing content-related information, the method being performed by a system for providing content-related information related to broadcast content provided through a broadcast channel to a client terminal having a display unit, broadcast reception means, and network connection means, the method including 1) extracting fingerprint information from broadcast content to be provided through a broadcast channel; 2) determining content-related information to be provided to the client terminal during a broadcast provided through the broadcast channel; and 3) transmitting the determined content-related information and fingerprint information extracted from broadcast content corresponding to the determined content-related information to the client terminal, wherein the client terminal displays the received content-related information on a display unit based on the received fingerprint information.

In this case, the content-related information may be stored in correspondence with previously designated broadcast content, and 2) may be configured to, if the designated broadcast content is played during the broadcast provided through the broadcast channel, determine the content-related information stored in correspondence with the designated broadcast content to be content-related information to be provided to the client terminal.

Further, 2) may be configured to determine the content-related information to be provided to the client terminal in response to a user input signal.

Furthermore, at 3), the fingerprint information transmitted to the client terminal may be fingerprint information about at least a part of the broadcast content corresponding to the determined content-related information.

Furthermore, the fingerprint information may be fingerprint information falling within a predetermined time period ranging from a starting point of the broadcast content corresponding to the determined content-related information.

Furthermore, the client terminal may include a fingerprint extraction unit for extracting fingerprint information from broadcast content received thereby, and the client terminal may compare the received fingerprint information with the fingerprint information extracted by the fingerprint extraction unit, and display the received content-related information when the pieces of fingerprint information are identical to each other.

Furthermore, the client terminal may store pieces of fingerprint information of the client terminal for a preset time period, and display the received content-related information on the display unit if there is an identical portion between the received fingerprint information and the stored fingerprint information.

Furthermore, the client terminal may obtain identification information about a broadcast channel on which the client terminal is currently receiving a broadcast through the broadcast reception means.

Furthermore, the client terminal may extract fingerprint information from a broadcast received through the broadcast reception means, and transmit the extracted fingerprint information to a channel information identification server, the channel information identification server may identify channel information about the broadcast currently being received by the client terminal based on the fingerprint information received from a broadcast channel identification unit of the client terminal, and transmit the identified channel information to the client terminal, and the client terminal may obtain identification information about the broadcast channel on which the client terminal is receiving the broadcast, based on the channel information about the broadcast received from the channel information identification server.

Furthermore, at 3), the broadcast channel identification information about broadcast content corresponding to the determined content-related information may be transmitted, together with the content-related information and the fingerprint information, to the client terminal, and the client terminal may be configured to, if the received broadcast channel identification information is identical to the obtained broadcast channel identification information, compare the received fingerprint information with stored fingerprint information, and display the received content-related information on the display unit when the pieces of fingerprint information are identical to each other.

Furthermore, before 3), the client terminal may transmit the broadcast channel identification information to the system, 3) may be configured to identify a client terminal which is playing the broadcast content corresponding to the content-related information determined at 2) based on the broadcast channel identification information received from the client terminal, and transmit the determined content-related information and the fingerprint information to the identified client terminal, and the client terminal may compare the received fingerprint information with the stored fingerprint information, and display the received content-related information on the display unit if the pieces of fingerprint information are identical to each other.

Furthermore, the client terminal transmitting the broadcast channel identification information to the system may be configured to transmit a broadcast channel identification request signal required to determine whether broadcast content corresponding to the content-related information determined at 2) is being played, to the client terminal connected to the system, and the client terminal may transmit the broadcast channel identification information to the system in response to the broadcast channel identification request signal.

Furthermore, the content-related information may be stored together such that pieces of fingerprint information about the previously designated broadcast content correspond to respective pieces of designated broadcast content, and 2) may be configured to compare fingerprint information about broadcast content provided through each broadcast channel with the pieces of previously stored fingerprint information corresponding to the pieces of broadcast content, and then determine whether the stored broadcast content is being played.

In addition, the method may further include the client terminal receiving a user input signal based on the displayed content-related information, and transmitting an additional operation request signal based on the received input signal to the system or a separate external device.

### Advantageous Effects

According to the present invention, there can be provide a system and method that can provide in real time various types of information related to broadcast content to a client terminal, which is provided with a broadcast reception means and a network connection means and which plays the corresponding broadcast, while playing the broadcast, and that can lengthen a period at which the channel information of a broadcast being played on the client terminal is identified, thus greatly reducing a load on a channel information identification server.

Further, the present invention can provide in real time content-related information based on respective situations in response to command input signals from a manager during the provision of a broadcast, to a client terminal which is playing the corresponding broadcast.

Furthermore, according to the present invention, there can be provided an information provision method and system that allow a user who receives broadcast content-related information to carry out an additional operation, so that secondary consumer interaction activities, such as product purchasing and information obtainment, can be increased, thus improving information provision efficiency by encouraging the user's interactive participation, and that can exactly determine in real time whether broadcast content is being played by using fingerprint information, thus further improving efficiency.

### Description of Drawings

FIG. 1 is a diagram showing a system for providing content-related information related to broadcast content according to the present invention and an overall environment in which the present invention can be implemented;
FIG. 2 is a diagram showing the internal configurations of a system 100 for providing content-related information and a client terminal 200 according to an embodiment of the present invention;
FIG. 3 is a diagram showing examples of content-related information and fingerprint information about each piece of broadcast content stored in a content-related information management unit 110;
FIG. 4 is a flowchart showing an embodiment of a method of providing content-related information to the client terminal 200 using the content-related information provision system 100 according to the present invention;
FIG. 5 is a flowchart showing another embodiment of a method of providing content-related information to the client terminal 200 using the content-related information provision system 100 according to the present invention; and
FIG. 6 is a flowchart showing a further embodiment of a method of providing content-related information to the client terminal 200 using the content-related information provision system 100 according to the present invention.

### Best Mode

Hereinafter, embodiments of the present invention will be described in detail with reference to the attached drawings.

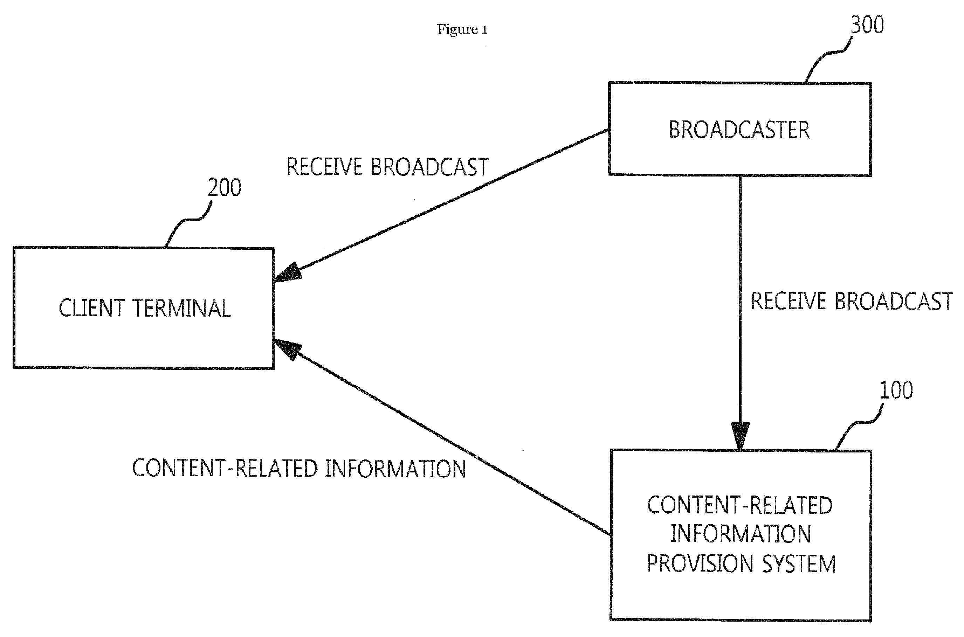

FIG. 1 is a diagram showing a system for providing content-related information related to broadcast content according to the present invention and an overall environment in which the present invention can be implemented.

Referring to FIG. 1, a system for providing content-related information related to broadcast content according to the present invention (hereinafter referred to as a "content-related information provision system 100") is connected to a client terminal 200 over a network, and receives a broadcast from a broadcaster 300. Here, the term "network" includes a concept, such as the Internet, a Public Switched Telephone Network (PSTN), or a mobile communication network. The content-related information provision system 100 determines content-related information to be provided to the client terminal 200 when previously designated broadcast content is played during a broadcast or when a signal is input from a user (a manager) while receiving the broadcast from the broadcaster 300, and provides the content-related information over the network.

The broadcaster 300 denotes any of service providers that provide all types of broadcasts generally called a broadcast in the current environment, for example, a terrestrial broadcaster such as a typical broadcasting station, a cable TV service provider, a DMB service provider, and an Internet TV service provider. In FIG. 1, although the broadcaster 300 has been shown as being a single component for the sake of convenience of description, it is apparent that multiple broadcasters may be present.

The client terminal 200 receives broadcasts provided by the broadcaster 300, and is provided with content-related information related to broadcast content being received by the client terminal 200 via the content-related information provision system 100 and the network. Further, since the client terminal 200 receives broadcasts and is connected to the content-related information provision system 100 over the network, it includes a broadcast reception means capable of receiving broadcasts and a network connection means. Furthermore, the client terminal 200 includes a display unit, for example, a Liquid Crystal Display (LCD) device, which can display the received broadcasts.

Such a client terminal 200 may be a smart television (SMART TV), which is a device that is widely sold these days. The term "smart TV" denotes a TV in which a network connection means, such as a wireless Local Area Network (LAN) module, is provided in a typical TV, and a program, such as a web browser, is executable, thus allowing a user to surf the web or to download and execute an application on the TV.

Further, the client terminal 200 may be a mobile communication terminal having, for example, a DMB reception function. Since recent mobile communication terminals have a wireless LAN connection function, such a wireless LAN connection function and a DMB reception function can be regarded as a network connection means and a broadcast reception means, respectively.

Furthermore, the client terminal 200 may be physically implemented using a plurality of devices rather than a single device, wherein the client terminal 200 may be implemented using, for example, a typical TV and a set-top box that is connected to the typical TV and that is configured to implement the function of the above-described smart TV. Such a set-top box is an auxiliary device enabling the function of a smart TV to be implemented using an existing typical TV without having to separately purchase a smart TV. For example, devices, such as Apple's Apple TV and Google's Google TV, have been released onto the market and, in addition, such a set-top box has recently been widely sold in other various forms. Furthermore, a set-top box may be a conventional well-known set-top box for receiving, for example, cable TV broadcasts. In this way, the client terminal 200 can be used in the present invention without being changed, regardless of the type of client terminal, as long as the client terminal is provided with a broadcast reception means and a network connection means.

The overall operation of the present invention implemented in such an environment will be summarized and described in brief below.

First, the client terminal 200 receives a broadcast from the broadcaster 300 through the broadcast reception means. The content-related information provision system 100 also receives a broadcast from the broadcaster 300. When previously designated broadcast content is played during the reception of the broadcast or when a command is received from the manager during the reception of the broadcast, the content-related information provision system 100 transmits previously stored content-related information to the client terminal 200 that is receiving the broadcast, and the client terminal 200 receives the information and displays the information on the display unit.

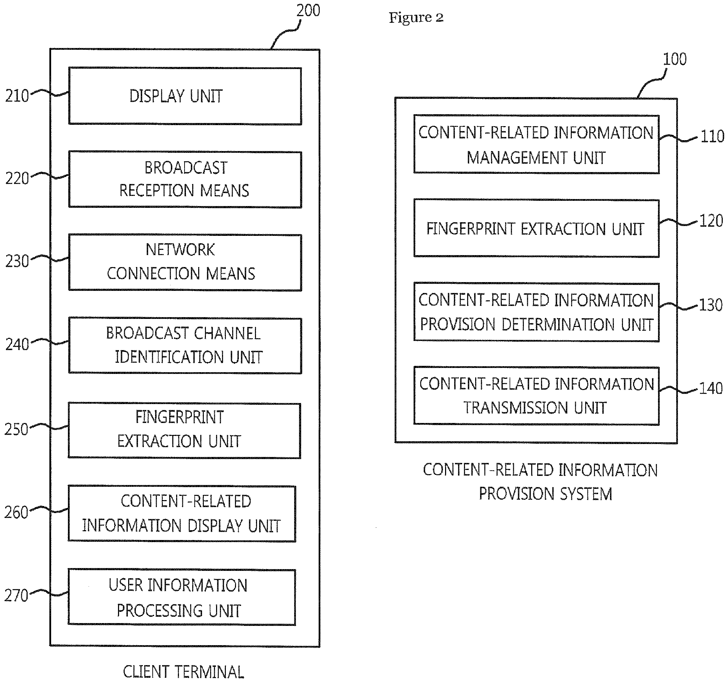

Detailed embodiments of the present invention will be described in detail below with reference to the drawings from FIG. 2.

FIG. 2 is a diagram showing the internal configurations of the content-related information provision system 100 and the client terminal 200 according to a preferred embodiment of the present invention.

Referring to FIG. 2, the content-related information provision system 100 includes a content-related information management unit 110, a fingerprint extraction unit 120, a content-related information provision determination unit 130, and a content-related information transmission unit 140. As described in conjunction with FIG. 1, the content-related information provision system 100 receives a broadcast from the broadcaster 300 and then includes a broadcast reception means, but this configuration is apparent from the conventional art, and so it should be noted that the illustration of the broadcast reception means and general components related thereto is omitted.

The content-related information management unit 110 functions to store and manage content-related information related to broadcast content provided through a broadcast channel that is to be provided to the client terminal 200 to be provided. Here, the broadcast channel may be one or more channels, and the content-related information management unit 110 previously stores pieces of content-related information so that they correspond to pieces of broadcast content provided by the broadcaster 300 through the broadcast channels.

Here, the broadcast content is sufficient as long as it is designated in advance. For example, the broadcast content may be a specific scene of a specific drama. Further, the broadcast content may be a previously designated specific advertising scene.

Furthermore, when the broadcast content is an advertisement, the content-related information may be various types of information related to the corresponding product, such as discount coupon information for the corresponding advertising product, various types of information about purchases, information about websites on which the product can be viewed, and event information. Furthermore, when the broadcast content is a specific scene of a specific drama, the content-related information may be information about the purchase of a product appearing in the corresponding scene.

The content-related information is preferably related to corresponding broadcast content, but does not necessarily mean that content-related information must have any association with broadcast content. Such content-related information can be input or edited by a separate management server, for example, by an advertiser or an adverting service provider (not shown). The content-related information management unit 110 may further include other additional data, such as description information about each piece of related information or an identifier uniquely assigned to identify the related information, so that the related information can be managed.

Further, the content-related information management unit 110 may extract fingerprint information based on at least one of audio, video, and a combination thereof, from each piece of broadcast content, and may store the extracted fingerprint information together with the content-related information in correspondence with each piece of broadcast content.

The fingerprint information is extracted by the fingerprint extraction unit 120, and the term "fingerprint information" denotes feature data indicating the features of data, such as audio data or video data, and is also referred to as "fingerprint data," "deoxyribonucleic acid (DNA) data," or gene data.

With regard to such fingerprint information, various schemes based on the prior art are proposed. When such fingerprint information is utilized, it can be easily determined whether pieces of data are identical, and thus such fingerprint information has recently been widely used in Digital Rights Management (DRM) fields or the like. For example, in the case of audio data, fingerprint information can be generated using various types of feature data indicating the features of audio data (e.g., frequency, amplitude, etc.), and in the case of video data, fingerprint information can be generated using various types of feature data indicating video data (e.g., the motion vector information, color information, etc. of frames).

An object of the present invention is not a method itself of generating such fingerprint information, and any type of conventional fingerprint generation/extraction method can be used without change, and thus a detailed description thereof will be omitted here.

In accordance with Korean Patent Application No. 10-2007-0044251 (entitled "Method and apparatus for generating audio fingerprint data and method and apparatus for comparing audio data using the same"), Korean Patent Application No. 10-2007-0054601 (entitled "Method and apparatus for determining identicalness of video data and detecting an identical section"), Korean Patent Application No. 10-2007-0060978 (entitled "Method and apparatus for clustering pieces of video data having identicalness among pieces of video data"), Korean Patent Application No. 10-2007-0071633 (entitled "Method and apparatus for providing a video data search service using video data clusters"), Korean Patent Application No. 10-2007-0091587 (entitled "Method and apparatus for setting and providing advertisement data using video data clusters"), and Korean Patent Application No. 10-2008-0051688 (entitled "Video processing method and apparatus"), which are filed by the present applicant, methods of generating the fingerprint data of audio or video data and clustering methods using such fingerprint data are described, and it is apparent that the fingerprint generation and extraction methods, filed by the present applicant, can also be applied to the present invention. In summary, the present invention can use conventional well-known fingerprint generation/extraction technology without change, regardless of which type of fingerprint information extraction scheme has been used.

The storage of pieces of fingerprint information about respective pieces of broadcast content by the content-related information management unit 110 is used by the content-related information provision determination unit 120, which will be described later, to determine whether broadcast content stored in the content-related information management unit 110 is being played during a broadcast. Further, as will be described later, the fingerprint information is transmitted to the client terminal 200 and is used by the client terminal 200 to determine whether to display content-related information.

Although it will be described later, the content-related information provision determination unit 130 continuously extracts fingerprint information based on at least one of audio, video, and a combination thereof for the corresponding broadcast in real time, for example, at regular intervals, while continuously monitoring broadcasts provided through a plurality of broadcast channels in real time, and compares the extracted fingerprint information with the fingerprint information stored in the content-related information management unit 110, as described above, thus determining whether any one of the pieces of broadcast content stored in the content-related information management unit 110 is being broadcasted.

Of course, it is possible to determine whether an advertisement is being played during a broadcast by using information other than the fingerprint information, but, as described above, it is preferable to use the fingerprint information because the fingerprint information clearly represents the unique features of audio or video data.

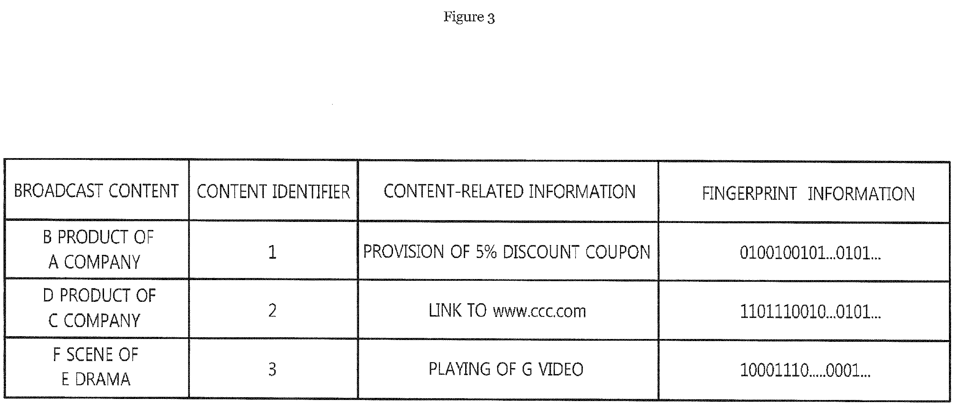

FIG. 3 is a diagram showing examples of content-related information and fingerprint information about each piece of broadcast content stored in the content-related information management unit 110.

Referring to FIG. 3, it can be seen that a brief description of each piece of broadcast content is included in a broadcast content field, and each identifier uniquely assigned to each piece of broadcast content is included in a content identifier field. As content-related information, information, such as "provision of 5% discount coupon", "link to www.ccc.com," and "play of G video," is included.

Although in FIG. 3, the details of content-related information, rather than actual content-related information, are illustrated for the convenience of description, it is preferable to include, in an actual implementation, data that enables a user on the client terminal side to be actually provided with content-related information having such details. For example, in the case of "provision of 5% discount coupon," content-related information may be configured to include a webpage implemented using a combination of text, audio, or video data which allows the user to be actually provided with such details, thus enabling the webpage as the actual content-related information to be provided to the client terminal.

In this case, the content-related information can be configured to include the webpage. For example, in the case of "link to www.ccc.com," a webpage containing a hyperlink can be stored as the content-related information so as to perform the corresponding operation. In addition, it is apparent that the content-related information can also be configured using simple text data in such a way that the text data is provided to the client terminal.

As will be described later, the client terminal 200 receives the content-related information from the content-related information provision system 100 and displays it on the display unit, so that the content-related information is preferably data defined to be able to perform such processing.

In the last field of FIG. 3, pieces of fingerprint information about respective pieces of broadcast content are represented by binary numbers. As described above, the content-related information provision determination unit 130 can determine using fingerprint information whether broadcast content included in the content-related information management unit 110 is being broadcasted.

The fingerprint information can include information about all frames of video data when the broadcast content is, for example, video data. Since the content-related information provision determination unit 130 must determine in real time that the corresponding broadcast content is starting, the fingerprint information can be configured to include fingerprint information corresponding to a section from the first frame of the corresponding broadcast content to a frame falling within a predetermined time period.

Referring back to FIG. 2, the fingerprint extraction unit 120 of the content-related information provision system 100 will be described. As described above, the fingerprint extraction unit 120 represents feature data indicative of the features of data, such as audio data or video data, and continuously extracts fingerprint information in real time for all possible broadcast channels that are provided using a suitable method well-known in the prior art. As described above, the extracted fingerprint information is transferred to the content-related information provision determination unit 130, and is used to identify whether the broadcast content stored in the content-related information management unit 110 is being played.

Further, when the corresponding related information is transmitted to the client terminal through the content-related information transmission unit 140 and is displayed on the client terminal 200, the fingerprint information is used to determine based on the fingerprint information whether to display the corresponding content-related information.

Below, the content-related information provision determination unit 130 will be described. The content-related information provision determination unit 130 functions to first determine whether broadcast content stored in the content-related information management unit 110 is being played during the broadcast provided through a broadcast channel, as described above, or to second determine content-related information to be provided to the client terminal 200 in response to a user input signal.

The first method can be performed such that, as described above, the fingerprint extraction unit 120 continuously extracts in real time fingerprint information based on at least one of audio, video, and a combination thereof for each broadcast provided through each broadcast channel, compares the extracted fingerprint information with the fingerprint information about each piece of broadcast content previously stored in the content-related information management unit 110, and then determines whether the broadcast content stored in the content-related information management unit 110 is being played.

In this case, the content-related information provision determination unit 120 must determine whether the corresponding content is being played within a short period ranging from a time point at which the corresponding broadcast content is played. The reason for this is that when the content is an advertisement, such an advertisement is generally terminated within a relatively short time, such as 20 seconds, 30 seconds, or 1 minute, and the content-related information is provided to the client terminal 200 for that time, as will be described later, and that when an additional operation request based on the content-related information is received from the client terminal 200, the additional operation request must be processed.

Therefore, the content-related information provision determination unit 130 preferably extracts fingerprint information about the audio or video data of a broadcast picture at intervals of a relatively short period. When the content-related information provision determination unit 130 determines that previously designated broadcast content is being played in the broadcast picture using the above method, it notifies the content-related information transmission unit 140 of the results of the determination together with information about the corresponding channel.

Meanwhile, the second method can be performed such that content-related information to be provided to the client terminal is determined in response to an input signal from the user (a manager), wherein this method can be configured using a method by which the manager transmits an input signal to the system 100 such that when the manager considers that content-related information is required at a specific time point while watching the broadcast content, the content-related information is provided.

In this case, the content-related information can also be designated. For example, when a specific scene of a specific drama is broadcasted, the manager can determine to designate content-related information that is considered to be related to the scene and to provide the content-related information as related information. Further, when a baseball game is broadcasted, the manager can determine to previously designate an event related to a home run as related information and to provide the event as related information to the client terminal 200 when a batter hits a home run.

Meanwhile, the content-related information transmission unit 140 functions to transmit the content-related information determined by the content-related information provision determination unit 130 as described above, and the fingerprint information extracted from broadcast content corresponding to the determined content-related information to the client terminal 200 over the network.

In this case, the fingerprint information transmitted from the content-related information transmission unit 140 to the client terminal 200 may be fingerprint information about at least a part of broadcast content, for which the content-related information is to be determined to be provided by the content-related information provision determination unit 130 and which corresponds to the content-related information. For example, the fingerprint information may fall within a predetermined time period (for example, a time frame of 1 second) ranging from the starting point (a time frame of 0 second) of broadcast content corresponding to the determined related information.

As will be described later, the client terminal 200 includes a fingerprint extraction unit 250 for continuously extracting in real time broadcast content that is provided through a broadcast channel for which the client terminal currently receives a broadcast, and can be configured to compare the fingerprint information extracted by the fingerprint extraction unit 250 with fingerprint information received from the content-related information transmission unit 140 and to display the received content-related information on the display unit if the pieces of fingerprint information are identical to each other.

Such a procedure can be performed simultaneously with a procedure of determining whether channels are identical to each other by using channel identification information, which will be described later. The reason for using the channel identification information, which will be described later, is to determine which broadcast channel is currently being displayed on the client terminal 200, and display content-related information on a screen only if channels are identical to each other.

In a case where only channel identification information is used, if a channel has changed after channel identification was performed by the client terminal 200, a case where content-related information is played on another broadcast channel other than the corresponding broadcast channel may occur. In order to prevent this case, the client terminal 200 must continuously perform a channel identification procedure at very short periods, which acts as a great load on the client terminal 200 and/or a channel information identification server, which will be described later.

Therefore, when the content-related information transmission unit 140 transmits at least a part of fingerprint information while transmitting the content-related information, and the client terminal 200 determines which broadcast channel, that is, which broadcast content, is being played in a stage before the corresponding content-related information is played, via a comparison of the fingerprint information, the client terminal 200 can lengthen a period at which information about the channel on which the broadcast is being received thereby is identified, thus obtaining the advantage of greatly reducing a load on the client terminal 200 and a channel information identification server 400.

Meanwhile, depending on system conditions, if possible, the client terminal 200 can determine whether to display the corresponding content-related information on the client terminal 200 using only the above-described fingerprint information without utilizing a channel information identification procedure, which will be described later. In this case, a channel identification procedure is not required, and so the channel information identification server 400 may be unnecessary, thus reducing the load on the entire network and saving system resources.

Meanwhile, there may be a time difference between pieces of broadcast content being provided to the client terminal 200 and to the system 100. If the broadcast content is played on the client terminal 200 later than it is on the system 100, and it can be determined whether broadcast content including the corresponding fingerprint information is being played after the fingerprint information has been received, there is no significant problem.

However, if the broadcast content is played on the client terminal 200 either earlier than it is on the system 100, or almost simultaneously with the system 100, a case where the broadcast content including the corresponding fingerprint information has already been played after the fingerprint information was received may occur.

Accordingly, in order to prepare for such a case, the content-related information display unit 260 of the client terminal 200 is preferably operated to store the fingerprint information of the client terminal 200 for a predetermined time period (for example, for 15 seconds), determine whether an identical portion is present between fingerprint information received from the content-related information transmission unit 140 and pieces of fingerprint information stored at intervals of 15 seconds, and display the received content-related information on the display unit if it is determined that the identical portion is present even in at least one portion of a range of 15 seconds.

As another method, a method of performing setting such that broadcast actually played on the client terminal 200 is always played, for example, 10 seconds later than it is on the system 100, can be used.

A method of displaying content-related information only on the client terminal 200, which is playing a broadcast including broadcast content corresponding to determined content-related information, among client terminals 200, using the channel identification information, simultaneously with the procedure of using fingerprint information, can be implemented as the following method.

Such a channel identification procedure can be used simultaneously with the above-described procedure of using fingerprint information in such a way that, for example, the channel identification procedure is performed first, and the above-described procedure of using fingerprint information is subsequently performed.

First, the client terminal 200 is provided with a broadcast channel identification unit 240 for obtaining information required to identify a broadcast channel on which the client terminal 200 is receiving a broadcast through a broadcast reception means 220, and is capable of determining whether to display content-related information, by using the broadcast channel identification information obtained by the broadcast channel identification unit 240.

For this operation, the content-related information transmission unit 140 of the content-related information provision system 100 transmits the broadcast channel identification information indicating the broadcast channel of the corresponding broadcast content while transmitting the content-related information. The content-related information display unit 250 of the client terminal 200 can compare the broadcast channel identification information obtained by the broadcast channel identification unit 240 with the broadcast channel identification information received from the content-related information provision system 100, and can display the corresponding related information on the display unit 210 if the pieces of channel identification information are identical to each other.

If the pieces of channel identification information are not identical, the content-related information display unit 250 ignores the received related information. In this case, if the pieces of channel identification information are identical to each other, the above-described fingerprint comparison procedure can be performed.

For example, when the client terminal 200 is a smart TV and is playing a terrestrial digital broadcast on a Seoul Broadcasting System (SBS) channel, such channel information is provided to the client terminal 200 through digital broadcast signals, and thus the broadcast channel identification unit 240 of the client terminal 200 can obtain broadcast channel identification information from the channel information. The broadcast channel identification unit 240 preferably updates broadcast channel identification information either when a channel is changed, or periodically.

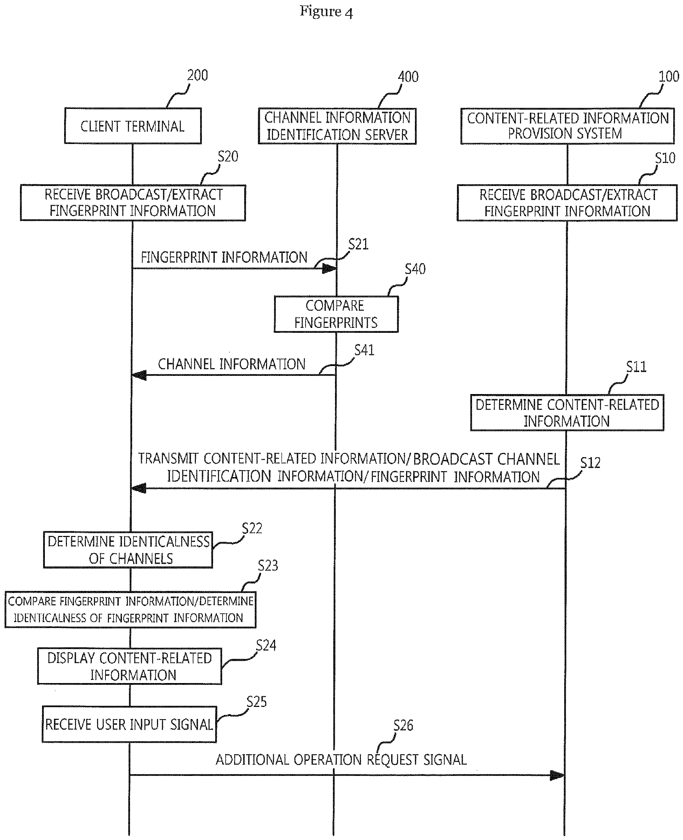

When the client terminal 200 does not know a broadcast channel on which a broadcast is being received thereby, broadcast channel identification information can be obtained using fingerprint information. That is, by the above-described fingerprint extraction unit 250 provided in the client terminal 200, the fingerprint information about the broadcast being received by the client terminal 200 is continuously extracted in real time and is transmitted to the channel information identification server 400 (see drawings from FIG. 4). The channel information identification server checks the broadcast channel identification information of the client terminal 200 and transmits it to the client terminal 200, thus obtaining the broadcast channel identification information.

The channel information identification server 400 functions to extract fingerprint information in real time from all broadcasts provided by the broadcaster 300 using the above-described method, compare the extracted fingerprint information with the fingerprint information received from the broadcast channel identification unit 240 of the client terminal 200, identifies the channel information of the broadcast which the client terminal 200 is currently receiving, and transmit the channel information to the client terminal 200.

Since the channel information identification server 400 premises that it determines fingerprint information for all broadcast channels in real time and knows channel information about all broadcast channels, it can compare the determined fingerprint information with received fingerprint information when the fingerprint information is received from the broadcast channel identification unit 240 of the client terminal 200, and can exactly determine on which broadcast channel the broadcast is being played on the client terminal 200. In this way, when the channel information of the broadcast being received by the client terminal 200 is identified by the channel information identification server 400, the identified broadcast channel information is transmitted to the client terminal 200, and the broadcast channel identification unit 240 of the client terminal can obtain identification information about the broadcast channel on which the broadcast is being played thereby.

Meanwhile, although the channel information identification server 400 can be implemented as a device physically separate from the content-related information provision system 100, it is apparent that the channel information identification server 400 can be configured to be included in the content-related information provision system 100.

Below, the second method in which content-related information is displayed only on the client terminal 200 on which broadcast content corresponding to content-related information determined to be provided by the content-related information provision system 100 is being played, among the client terminals connected to the system 100, will be described.

The second method denotes a scheme in which the content-related information provision system 100 first receives broadcast channel identification information from the client terminal 200, identifies a client terminal 200 that is playing broadcast content corresponding to content-related information determined based on the broadcast channel identification information, and transmits content-related information only to the identified client terminal 200.

For this operation, the client terminal 200 can obtain identification information about the broadcast channel, on which the broadcast is currently being received and played thereby, via the above-described broadcast channel identification unit 240, and can transmit the broadcast channel identification information to the content-related information provision system 100. In this case, the broadcast channel identification unit 240 can automatically transmit the identification information about the broadcast channel on which the broadcast is currently being received to the content-related information provision system 100, or, alternatively, transmit the identification information about the broadcast channel on which the broadcast is currently being received to the content-related information provision system 100 in response to a broadcast channel identification request signal when the broadcast channel identification request signal is received from the content-related information provision system 100.

Meanwhile, the broadcast channel identification unit 240 of the client terminal 200 can transmit time information together while transmitting the fingerprint information to the channel information identification server 400. This operation is intended to process a case where there is a time difference between time points at which the client terminal 200 and the content-related information provision system 100 receive the same broadcast picture during the procedure of transmitting actual broadcast pictures.

For this, as described above, the broadcast channel identification unit 240 of the client terminal 200 transmits its time information (which can be obtained by a clock typically mounted in a terminal) together while transmitting the fingerprint information to the channel information identification server 400. The channel information identification server 400 can obtain a time difference, that is, a time offset, between the client terminal 200 and the content-related information provision system 100 for the same picture by comparing the time information with the time information of the content-related information provision system 100 while identifying the channel information of the client terminal 200 based on the fingerprint information, as described above.

That is, when the channel information identification server 400 is present as a device separate from the content-related information provision system 100, the server and the system must preferably be set such that they are synchronized with each other. When the channel information identification server 400 is included in the content-related information provision system 100, it can be considered that the channel information identification server 400 is synchronized with the content-related information provision system 100.

Meanwhile, it is preferable to use absolute time information, for example, Greenwich Mean Time (GMT), as the time information of the content-related information provision system 100. The channel information identification server 400 compares the absolute time information with the time information received from the client terminal 200 while comparing fingerprint information, and then determines a time difference, that is, time offset information, for the same picture. If the time offset information has been obtained, the channel information identification server 400 transmits the time offset information to the client terminal 200. The time offset information can be transmitted together with the channel information.

Once the time offset information is obtained, the content-related information transmission unit 140 transmits the absolute time information together with the content-related information stored in the content-related information management unit 110 to the client terminal 200 that is currently playing broadcast content corresponding to the related information determined by the content-related information provision determination unit 130.

The client terminal 200 that received the absolute time information and the content-related information can display the related information on the display unit of the client terminal 200 on the basis of the time offset information.

Next, the client terminal 200 will be described below.

The client terminal 200 includes the display unit 210, the broadcast reception means 220, a network connection means 230, the broadcast channel identification unit 240, the fingerprint extraction unit 250, the content-related information display unit 260, and a user information processing unit 270. As described above with reference to FIG. 1, the client terminal 200 has the function of receiving broadcasts provided in various forms, and the function of connecting to a network, such as the Internet, and may be, for example, a smart TV, a mobile communication terminal having a DMB reception function, or an Internet Protocol (IP) TV (IPTV). Among the components of the client terminal 200, the display unit 210, the broadcast reception means 220, and the network connection means 230 are well known in the prior art, and thus a detailed description thereof will be omitted.

The broadcast channel identification unit 240 is a means for obtaining identification information about a broadcast channel on which a broadcast is received through the broadcast reception means 220, and it has been described in detail above, and thus a detailed description thereof will be omitted.

As described above, the fingerprint extraction unit 250 functions to continuously extract in real time the fingerprint information about broadcast content that is currently being provided through a broadcast channel by the client terminal 200.

As described above, the fingerprint information extracted by the fingerprint extraction unit 250 can be transmitted to the channel information identification server 400 and can be used to identify channel information. Further, as described above, the fingerprint information can be used to control whether to display the corresponding content-related information via a comparison with the fingerprint information received from the system 100. This operation has also been described above, and thus a detailed description thereof will be omitted.

By the above-described method, the content-related information display unit 260 functions to perform control such that content-related information received from the system 100 is displayed on the display unit 210 based on the fingerprint information received from the content-related information transmission unit 140 of the system 100.

As described above, the content-related information display unit 260 can receive the broadcast channel identification information, together with the related-information and the fingerprint information, from the content-related information provision system 100, first determine based on the broadcast channel identification information whether the received broadcast channel is identical to a broadcast channel on which the broadcast is currently being played, compare the pieces of fingerprint information if the channels are identical to each other, and display the corresponding content-related information only when the pieces of fingerprint information are identical to each other.

As another method, when content-related information is received only for the client terminal 200 that is currently playing the corresponding broadcast content from the content-related information provision system 100, as described above, pieces of fingerprint information are compared, and then the content-related information display unit 250 displays the content-related information on the display unit 210 while receiving the content-related information if the pieces of fingerprint information are identical to each other. In this case, the content-related information display unit 250 can display the content-related information based on time offset information, as described above.

Meanwhile, methods by which the content-related information display unit 250 displays related information on the display unit 210 can be implemented in various forms.

First, the received content-related information can be displayed so that it is overlaid on a broadcast picture currently being received on the display unit 210. For example, the content-related information can be displayed while being overlaid on a broadcast picture appearing in a lower portion of the display unit 210. The content-related information at this time may be data enabling the details of the content-related information to be actually executed, as described above with reference to FIG. 3.

For example, in the case of "provision of 5% discount coupon," this is displayed as text data for a predetermined period of time so that the details of the data can be executed, and a method of allowing the user to be provided with the corresponding coupon, for example, a hyperlink, is provided to the user, with the result that information enabling the hyperlink to be selected can be continuously displayed while being overlaid on the broadcast picture. Further, the related information displayed on the broadcast picture can be provided in the form of, for example, a flashing or scrolling form.

Meanwhile, the content-related information display unit 260 can be configured to partially display the received content-related information so that it is not overlaid on the broadcast picture currently being received, on the display unit 210. For example, this configuration can be provided using a method by which the content-related information is provided in a lower portion of the screen in the form of a bar, and the broadcast picture is displayed to be reduced by a size of the area in which content-related information is provided.

Meanwhile, the user information processing unit 270 of the client terminal 200 functions to receive the user input signal based on the content-related information displayed as described above, and to transmit an additional operation request signal based on the received input signal to the content-related information provision system 100 or a separate external device. As described above, when the content-related information unilaterally provides only information to the client terminal 200, the user information processing unit 260 may be omitted, but there are cases where some content-related information may prompt the user to conduct a specific operation.

For example, there may occur cases where the user is prompted to conduct an additional operation, such as accessing a specific site or sending a text message to a specific phone number, in order to be provided with information, such as "the provision of 5% discount coupon" as content-related information.

When the user of the client terminal 200 enters an additional operation request signal in response to the request signal, the user information processing unit 270 functions to receive the additional operation request signal and transmit it to the content-related information provision system 100 or a separate external device (e.g., a specific website). For this operation, the client terminal 200 preferably has an input means (e.g., a keyboard, a mouse, and a remote control) allowing the user to enter an input signal.

FIG. 4 is a flowchart showing an embodiment of a method of providing content-related information to the client terminal 200 using the above-described content-related information provision system 100.

First, as described above, the client terminal 200 and the content-related information provision system 100 receive a broadcast from the broadcaster 300, and continuously extract fingerprint information from received broadcast content in real time (S10 and S20).

During the reception of the broadcast, the content-related information provision system 100 determines content-related information to be provided to the client terminal (S11).

The determination of content-related information can be performed in such a way that the content-related information provision system 100 previously stores content-related information and corresponding fingerprint information for each piece of broadcast content included in broadcasts provided through broadcast channels in the content-related information management unit 110, and determines whether broadcast content previously designated and stored in the content-related information management unit 110 is currently being played during each broadcast while receiving a plurality of broadcasts through a plurality of broadcast channels from one or more broadcasters 300.

This can be performed by comparing fingerprint information extracted by the fingerprint extraction unit 120 with previously stored fingerprint information. The determination of whether the stored broadcast content is being played can be performed using a method in which fingerprint information based on at least one of audio, video, and a combination thereof, which are previously extracted from each piece of broadcast content included in each broadcast provided through each broadcast channel, is stored together with the content-related information in the content-related information management unit 110 in correspondence with the broadcast content, and in which the content information provision determination unit 130 extracts fingerprint information based on at least one of audio, video, and a combination thereof from a broadcast provided through the broadcast channel, compares the extracted fingerprint information with the fingerprint information about each piece of broadcast content previously stored in the content-related information management unit 110, and then determines whether the broadcast content stored in the content-related information management unit 110 is being played.

When the previously designated and stored broadcast content is played in this way, the content-related information stored in correspondence with the broadcast content is determined to be content-related information that is to be provided to the client terminal 200.

Meanwhile, step S11 can be determined in response to the user input signal.

When the content-related information to be provided to the client terminal 200 is determined, the content-related information transmission unit 130 of the content-related information provision system 100 transmits the fingerprint information, together with the determined content-related information and the broadcast channel identification information, to all connected client terminals 100 (S12).

Here, as described above, the transmitted fingerprint information may be fingerprint information corresponding to at least a part of broadcast content corresponding to the determined content-related information. For example, the fingerprint information may be fingerprint information falling within a predetermined time period ranging from the starting point of broadcast content corresponding to the determined content-related information.

The content-related information provision system 100 is configured to, if broadcast channel identification information is known, transmit it unchanged, and if broadcast channel identification information is not known, detect channel identification information through the channel information identification server 400, similar to the procedure in which the client terminal 200 obtains channel information through the channel information identification server 400 in the above procedure.

Meanwhile, the client terminal 200 extracts fingerprint information while receiving a broadcast (S20), and transmits the fingerprint information about the received broadcast to the channel information identification server 400 when the channel information of the broadcast received by the client terminal 200 is not known (S21).

The channel information identification server 400 compares received fingerprint information with its own fingerprint information (S40), identifies channel information, and transmits the channel information to the client terminal 200 (S41).

When this procedure is performed in advance, the client terminal 200 can obtain the channel information of the broadcast being received thereby before step S12. Of course, when the client terminal 200 knows broadcast channel information, steps S21, S40, and S41 can be omitted.

Further, the channel information identification server 400 premises that the channel information of all possible broadcasts is known or can be known.

In this state, when fingerprint information, together with content-related information and broadcast channel identification information, are transmitted to the client terminal 200 at step S12, the client terminal 200 determines whether the received broadcast channel identification information is identical to the broadcast channel identification information obtained by the broadcast channel identification unit 240 by comparing the pieces of broadcast channel identification information (S22).

If they are identical to each other, it is determined whether the fingerprint information received from the system 100 is identical to the fingerprint information extracted by the fingerprint extraction unit 250 of the client terminal 100 by comparing the pieces of fingerprint information (S23).

As described above, the fingerprint information transmitted to the client terminal 200 may be fingerprint information about at least a part of broadcast content corresponding to the determined content-related information, and the client terminal 200 can be configured to store the fingerprint information of the client terminal 200 for a preset time period and display the received content-related information on the display unit if there is an identical portion between the received fingerprint information and the stored fingerprint information.

By means of this procedure, when the pieces of fingerprint information are identical to each other, the received content-related information is displayed on the display unit (S24). In this case, the content-related information is displayed in such a way that it is overlaid or not overlaid on a broadcast picture that is received and played, as described above.

When the content-related information is displayed, an additional operation request signal may be generated by the client terminal depending on the related information, wherein an input signal is received from the user based on the content-related information displayed on the client terminal 200 (S25), and the additional operation request signal based on the received input signal is transmitted to the content-related information provision system 100 or a separate external device (S26).

In FIG. 4, although the additional operation request signal is shown as being transmitted only to the content-related information provision system 100, it is apparent that the additional operation request signal can also be transmitted to a separate external device.

Meanwhile, it is possible to perform only step S24 without performing step S22 and then compare only fingerprint information. In this case, at step S12, there is no need to transmit broadcast channel identification information.

The contents of FIG. 4 are identical to those described with reference to FIGS. 1 to 3, and thus a detailed description of duplicated configuration is omitted, and it should be noted that only operation features have been schematically described in FIG. 4.

According to the embodiment of FIG. 4, it can be finally determined whether to display content-related information in consideration of fingerprint information. Therefore, a period at which, when the client terminal 200 changes a channel, the procedure (S21, S40, and S41) for identifying channel information at very short periods (for example, at intervals of 10 seconds) so as to check a change in channel is performed can be lengthened, and thus there is an advantage in that a load on the channel information identification server 400 and the client terminal 200 required to perform such an operation can be greatly reduced.

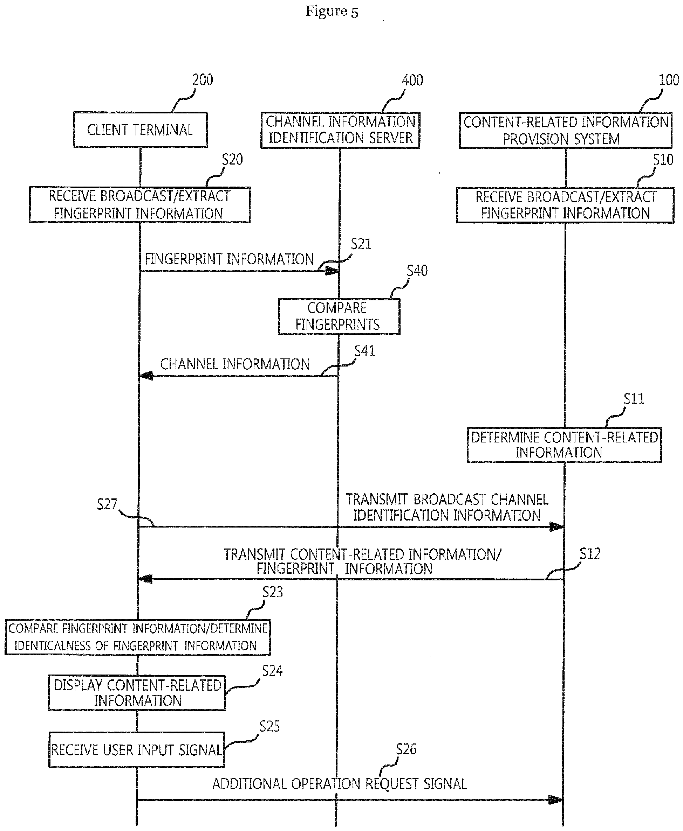

FIG. 5 is a flowchart showing another embodiment of a method of providing content-related information to the client terminal 200 using the content-related information provision system 100 according to the present invention.

Compared to the case of FIG. 4, this embodiment shows a case where content-related information is transmitted only to a client terminal 200 which is playing an identified advertisement without being transmitted to all client terminals to which the content-related information provision system 100 is connected.

Steps S10, S11, S20, S21, S40, and S41 are identical to those of FIG. 4, and thus a detailed description thereof will be omitted here.

After steps S11 and S41, the client terminal 200 obtains information about a broadcast channel on which it is receiving a broadcast, and transmits the identification information about the broadcast channel to the content-related information provision system 100 (S27). In FIG. 5, for the convenience of description, step S27 is shown as being performed after step S11, but it is not necessarily performed at that time.

As described above, when the client terminal 200 knows information about a broadcast channel on which it is receiving and playing a broadcast, it can transmit the information as broadcast channel identification information to the content-related information provision system 100.

This can be implemented using a method by which transmission is performed, for example, either periodically at regular periods, or whenever a change in channel is performed by the client terminal 200.

Through the above procedure, the content-related information provision system 100 can know information about a channel on which each client terminal 100 connected to the system is currently receiving, that is, playing, a broadcast. Accordingly, a client terminal 100 on which broadcast content corresponding to content-related information determined by the content-related information provision determination unit 130 is being played can be known.

The content-related information transmission unit 140 transmits the determined content-related information and fingerprint information to the corresponding client terminal 100 based on the channel information (S12). Here, this step is different from step S12 of FIG. 4 in that broadcast channel identification information is not included.

Next, the client terminal 200 that received the content-related information performs steps S23 to S26. Compared to FIG. 4, steps are identical to steps S23 to S26 of FIG. 4 except that step S22, that is, the procedure of determining whether pieces of channel identification information are identical to each other, is omitted, and thus a detailed description thereof will be omitted.

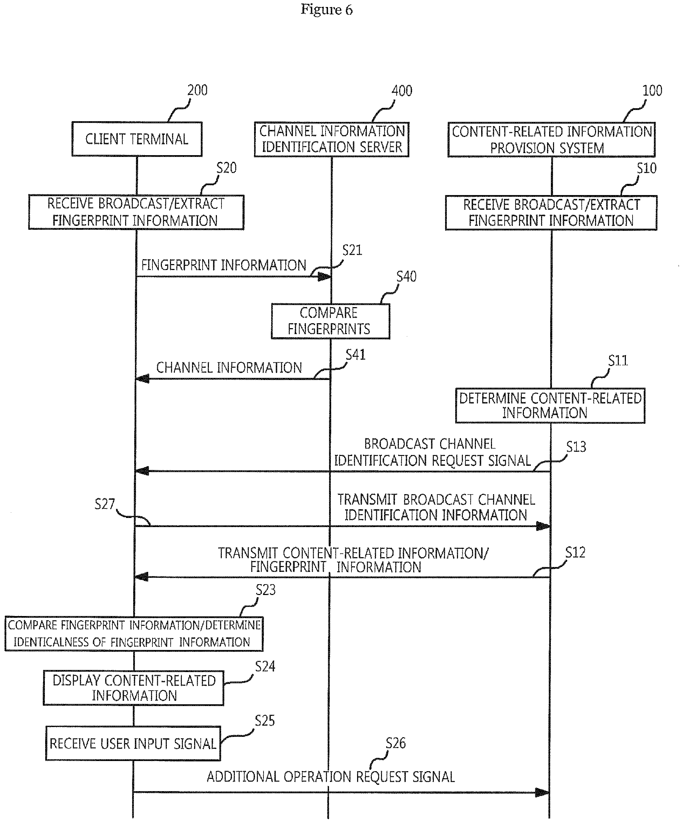

FIG. 6 is a flowchart showing a further embodiment of a method of providing content-related information to the client terminal 200 using the content-related information provision system 100 according to the present invention.

Compared to FIG. 5, there is a difference from FIG. 6 only in that the content-related information provision system 100 performs step S11 and then the content-related information transmission unit 140 transmits a broadcast channel identification request signal, required to determine whether broadcast content corresponding to determined content-related information is currently being played, to the client terminal 200 connected to the content-related information provision system 100 (S13), and the client terminal 100 transmits broadcast channel identification information in response to the request signal (S27).

That is, in the case of FIG. 6, there is a difference in that broadcast channel identification information is transmitted only when a broadcast channel identification request signal is received, rather than the case of FIG. 5 in which the client terminal 200 first transmits the channel information of a broadcast which it is receiving and playing to the content-related information provision system 100. Other procedures are similar to those of FIG. 5, and thus a detailed description thereof will be omitted.

For example, the client terminal 200 may be any type of terminal having a broadcast reception means and a network connection means, and may also include a computer, a tablet PC, or a mobile communication terminal which receives broadcasts provided over the Internet, as well as the above-described smart TV and a mobile communication terminal having a DMB reception function. Further, the concept of broadcasts may include not only a typical broadcast form, but also any type of real-time streaming service, such as a broadcast of a soccer game provided over the Internet or, moreover, Video On Demand (VOD).

## Claims

1. A system for providing content-related information, the system providing content-related information related to broadcast content provided to a client terminal (200) having a display unit (210), broadcast reception means (220), and network connection means (230) through a broadcast channel, comprising:
a content-related information management unit (110) for storing content-related information corresponding to previously designated broadcast content and pieces of fingerprint information about the previously designated broadcast content to be provided to the client terminal;
a fingerprint extraction unit (120) for extracting fingerprint information from broadcast content to be provided through the broadcast channel;
a content-related information provision determination unit (130) for determining content-related information to be provided to the client terminal wherein, during the broadcast provided through the broadcast channel, the content-related information provision unit is arranged to determine whether the broadcast content stored in the content-related information management unit is being broadcasted by comparing fingerprint information about broadcast content with the pieces of fingerprint information corresponding to the pieces of broadcast content previously stored in the content-related information management unit and the content-related information provision determination unit determines the content-related information stored in correspondence with the broadcast content being broadcasted as content-related information to be provided to the client terminal; and
a content-related information transmission unit (140) for transmitting the content-related information determined by the content-related information provision determination unit and fingerprint information extracted from broadcast content corresponding to the determined content-related information and broadcast channel identification information about broadcast content corresponding to content-related information determined by the content-related information provision determination unit to the client terminal over a network,
wherein the client terminal comprises:
a fingerprint extraction unit (250) for continuously extracting, in real time, fingerprint information from broadcast content received thereby;
a broadcast channel identification unit (240) for obtaining broadcast channel identification information of the broadcast which the client terminal is currently receiving through the broadcast reception means from a channel information identification server (400) based on the fingerprint information; and
a content-related information display unit (260) for performing control such that the received content-related information is displayed on a display unit if the broadcast channel identification information received from the content-related information transmission unit is identical to the broadcast channel identification information obtained by the broadcast channel identification unit and the fingerprint information received from the content-related information transmission unit is identical to the fingerprint information extracted by the fingerprint extraction unit.

2. The system of claim 1, wherein the fingerprint information transmitted from the content-related information transmission unit to the client terminal is fingerprint information about at least a part of the broadcast content corresponding to the content-related information determined by the content-related information provision determination unit.

3. The system of claim 2, wherein the fingerprint information is fingerprint information falling within a predetermined time period ranging from a starting point of the broadcast content corresponding to the content-related information determined by the content-related information provision determination unit.

4. The system of claim 1, wherein the content-related information display unit is arranged to store pieces of fingerprint information of the client terminal for a preset time period, and to perform control such that if there is an identical portion between the fingerprint information received from the content-related information transmission unit and the stored fingerprint information, the received content-related information is displayed on the display unit.

5. The system of claim 1, wherein:
the broadcast channel identification unit of the client terminal is arranged to extract fingerprint information from a broadcast received through the broadcast reception means, and transmits the extracted fingerprint information to a channel information identification server,
the channel information identification server is arranged to identify channel information about the broadcast currently being received by the client terminal based on the fingerprint information received from the broadcast channel identification unit of the client terminal, and transmits the identified channel information to the client terminal, and
the broadcast channel identification unit of the client terminal is arranged to obtain identification information about the broadcast channel on which the client terminal is receiving the broadcast, based on the channel information about the broadcast received from the channel information identification server.

6. The system of claim 1, wherein the channel information identification server is included in the system for providing content-related information.

7. The system of claim 1, wherein the client terminal further comprises a user information processing unit (270) for receiving a user input signal based on the displayed content-related information, and transmitting an additional operation request signal based on the received input signal to the system or a separate external device.

8. The system of claim 1, wherein the broadcast channel identification unit of the client terminal is arranged to transmit time information together while transmitting the fingerprint information to the channel information identification server, and
the channel information identification server is arranged to compare absolute time information of the system for providing content-related information with the time information received from the client terminal, to obtain information about a time offset between broadcast pictures of the client terminal and the system for providing content-related information, and to transmit the time offset information to the client terminal.

9. The system of claim 1, wherein:
the content-related information transmission unit is arranged to transmit the absolute time information, together with the content-related information, to the client terminal, and
the client terminal is arranged to display the content-related information based on the received absolute time information and the time offset information between the broadcast pictures.

10. The system of any one of claims 1 to 9, wherein, to continuously extract the fingerprint information from the broadcast content in real time, the fingerprint extraction unit (250) is configured to extract the fingerprint information from the broadcast content at regular intervals.

11. A method of providing content-related information, the method being performed by a system for providing content-related information related to broadcast content provided through a broadcast channel to a client terminal (200) having a display unit (210), broadcast reception means (220), and network connection means (230), the method comprising:
1) extracting fingerprint information from broadcast content to be provided through a broadcast channel;
2) determining content-related information to be provided to the client terminal during a broadcast provided through the broadcast channel, by determining whether the broadcast content previously stored is being broadcasted by way of comparing fingerprint information about broadcast content with the pieces of fingerprint information corresponding to the pieces of broadcast content previously stored and by determining the content-related information stored in correspondence with the broadcast content being broadcasted as content-related information to be provided to the client terminal; and
3) transmitting the determined content-related information, fingerprint information extracted from broadcast content corresponding to the determined content-related information and broadcast channel identification information about broadcast content corresponding to the determined content-related information to the client terminal,
wherein the client terminal comprises a fingerprint extraction unit (250) for continuously extracting, in real time, fingerprint information from broadcast content received thereby,
wherein the client terminal obtains broadcast channel identification information of the broadcast which the client terminal is currently receiving through the broadcast reception means from a channel information identification server (400) based on the fingerprint information, and
wherein the client terminal performs control such that the received content-related information is displayed on a display unit if the broadcast channel identification information received from the system is identical to the obtained broadcast channel identification information and the fingerprint information received from system is identical to the fingerprint information extracted by the fingerprint extraction unit.

12. The method of claim 11, wherein, to continuously extract the fingerprint information from the broadcast content in real time, the fingerprint extraction unit (250) is configured to extract the fingerprint information from the broadcast content at regular intervals.

## Patentansprüche

1. System zum Bereitstellen inhaltsbezogener Informationen, wobei das System inhaltsbezogene Informationen in Bezug auf Rundfunkinhalt bereitstellt, der einem Client-Endgerät (200) mit einer Anzeigeeinheit (210), einer Rundfunkempfangseinrichtung (220) und einer Netzverbindungseinrichtung (230) durch einen Rundfunkkanal bereitgestellt wird, umfassend:
eine Managementeinheit für inhaltsbezogene Informationen (110) zum Speichern von inhaltsbezogenen Informationen, die zuvor bezeichnetem Rundfunkinhalt entsprechen, und von Fingerabdruckinformationselementen über den zuvor bezeichneten Rundfunkinhalt, die dem Client-Endgerät bereitzustellen sind;
eine Fingerabdruckextraktionseinheit (120) zum Extrahieren von Fingerabdruckinformationen aus durch den Rundfunkkanal bereitzustellendem Rundfunkinhalt;
eine Bereitstellungsbestimmungseinheit für inhaltsbezogene Informationen (130) zum Bestimmen inhaltsbezogener Informationen, die dem Client-Endgerät bereitzustellen sind,
wobei während der durch den Rundfunkkanal bereitgestellten Rundfunksendung die Bereitstellungsbestimmungseinheit für inhaltsbezogene Informationen zum Bestimmen, ob der in der Managementeinheit für inhaltsbezogene Informationen gespeicherte Rundfunkinhalt gesendet wird, durch Vergleichen von Fingerabdruckinformationen über Rundfunkinhalt mit den Fingerabdruckinformationselementen, die den Rundfunkinhaltsinformationselementen entsprechen, die zuvor in der Managementeinheit für inhaltsbezogene Informationen gespeichert wurden, angeordnet ist und die Bereitstellungsbestimmungseinheit für inhaltsbezogene Informationen die entsprechend dem Rundfunkinhalt, der per Rundfunk gesendet wird, gespeicherten inhaltsbezogenen Informationen als dem Client-Terminal bereitzustellende inhaltsbezogene Informationen bestimmt;
eine Übertragungseinheit für inhaltsbezogene Informationen (140) zum Übertragen der inhaltsbezogenen Informationen, die durch die Bereitstellungsbestimmungseinheit für inhaltsbezogene Informationen bestimmt werden, und aus Rundfunkinhalt extrahierten Fingerabdruckinformationen, die den bestimmten inhaltsbezogenen Informationen entsprechen, und Rundfunkkanalidentifikationsinformationen über Rundfunkinhalt, die den inhaltsbezogenen Informationen entsprechen, die durch die Bereitstellungsbestimmungseinheit für inhaltsbezogene Informationen bestimmt werden, über ein Netzwerk an das Client-Endgerät,
wobei das Client-Endgerät aufweist:
eine Fingerabdruckextraktionseinheit (250) zum kontinuierlichen Extrahieren von Fingerabdruckinformationen aus dadurch empfangenem Rundfunkinhalt in Echtzeit;
eine Rundfunkkanalidentifikationseinheit (240) zum Erhalten von Rundfunkkanalidentifikationsinformationen der Rundfunksendung, die das Client-Endgerät aktuell durch die Rundfunkempfangseinrichtung empfängt, von einem Kanalinformationsidentifikations-Server (400) auf Basis der Fingerabdruckinformationen und
eine Anzeigeeinheit für inhaltsbezogene Informationen (260) zum Durchführen von Steuerung, so dass die empfangenen inhaltsbezogenen Informationen auf einer Anzeigeeinheit angezeigt werden, wenn die von der Übertragungseinheit für inhaltsbezogene Informationen empfangenen Rundfunkkanalidentifikationsinformationen mit den durch die Rundfunkkanalidentifikationseinheit erhaltenen Rundfunkkanalidentifikationsinformationen identisch sind und die von der Übertragungseinheit für inhaltsbezogene Informationen empfangenen Fingerabdruckinformationen mit den durch die Fingerabdruckextraktionseinheit extrahierten Fingerabdruckinformationen identisch sind.

2. System nach Anspruch 1, wobei die von der Übertragungseinheit für inhaltsbezogene Informationen an das Client-Endgerät übertragenen Fingerabdruckinformationen Fingerabdruckinformationen über wenigstens einen Teil des Rundfunkinhalts sind, der den durch die Bereitstellungsbestimmungseinheit für inhaltsbezogene Informationen bestimmten inhaltsbezogenen Informationen entspricht.

3. System nach Anspruch 2, wobei die Fingerabdruckinformationen Fingerabdruckinformationen sind, die innerhalb einen vorbestimmten Zeitabschnitt fallen, der von einem Anfangspunkt des Rundfunkinhalts reicht, der den durch die Bereitstellungsbestimmungseinheit für inhaltsbezogene Informationen bestimmten inhaltsbezogenen Informationen entspricht.

4. System nach Anspruch 1, wobei die Anzeigeeinheit für inhaltsbezogene Informationen zum Speichern von Fingerabdruckinformationselementen des Client-Endgeräts für eine voreingestellte Zeitspanne und zum Durchführen von Steuerung, so dass, wenn es zwischen den von der Übertragungseinheit für inhaltsbezogene Informationen empfangenen Fingerabdruckinformationen und den gespeicherten Fingerabdruckinformationen einen identischen Teil gibt, die empfangenen inhaltsbezogenen Informationen auf der Anzeigeeinheit angezeigt werden.

5. System nach Anspruch 1, wobei:
die Rundfunkkanalidentifikationseinheit des Client-Endgeräts zum Extrahieren von Fingerabdruckinformationen aus einer durch die Rundfunkempfangseinrichtung empfangenen Rundfunksendung angeordnet ist und die extrahierten Fingerabdruckinformationen zu einem Kanalinformationsidentifikations-Server überträgt,
der Kanalinformationsidentifikations-Server zum Identifizieren von Kanalinformationen über die aktuell durch das Client-Endgerät empfangene Rundfunksendung auf Basis der von der Rundfunkkanalidentifikationseinheit des Client-Endgeräts empfangenen Fingerabdruckinformationen angeordnet ist und die identifizierten Kanalinformationen an das Client-Endgerät überträgt, und
die Rundfunkkanalidentifikationseinheit des Client-Endgeräts zum Erhalten von Identifikationsinformationen über den Rundfunkkanal, auf dem das Client-Endgerät die Rundfunksendung empfängt, auf Basis der Kanalinformationen über die von dem Kanalinformationsidentifikations-Server empfangene Rundfunksendung angeordnet ist.

6. System nach Anspruch 1, wobei der Kanalinformationsidentifikations-Server in dem System zum Bereitstellen von inhaltsbezogenen Informationen enthalten ist.

7. System nach Anspruch 1, wobei das Client-Endgerät ferner eine Benutzerinformationsverarbeitungseinheit (270) zum Empfangen eines Benutzereingangssignals auf Basis der angezeigten inhaltsbezogenen Informationen und Übertragen eines Signals zur Anforderung einer zusätzlichen Operation auf Basis des empfangenen Eingangssignals an das System oder an eine separate externe Vorrichtung aufweist.

8. System nach Anspruch 1, wobei die Rundfunkkanalidentifikationseinheit des Client-Endgeräts zum Übertragen von Zeitinformationen zusammen während des Übertragens der Fingerabdruckinformationen an den Kanalinformationsidentifikations-Server angeordnet ist und
der Kanalinformationsidentifikations-Server zum Vergleichen absoluter Zeitinformationen des Systems zum Bereitstellen von inhaltsbezogenen Informationen mit den vom Client-Endgerät empfangenen Zeitinformationen, zum Erhalten von Informationen über einen Zeitversatz zwischen Rundfunkbildern des Client-Endgeräts und dem System zum Bereitstellen von inhaltsbezogenen Informationen und zum Übertragen der Zeitversatzinformationen an das Client-Endgerät angeordnet ist.

9. System nach Anspruch 1, wobei:
die Übertragungseinheit für inhaltsbezogene Informationen zum Übertragen der absoluten Zeitinformationen zusammen mit den inhaltsbezogenen Informationen an das Client-Endgerät angeordnet ist und
das Client-Endgerät zum Anzeigen der inhaltsbezogenen Informationen auf Basis der empfangenen absoluten Zeitinformationen und der Zeitversatzinformationen zwischen den Rundfunkbildern angeordnet ist.

10. System nach einem der Ansprüche 1 bis 9, wobei die Fingerabdruckextraktionseinheit (250) konfiguriert ist, um zum kontinuierlichen Extrahieren der Fingerabdruckinformationen aus dem Rundfunkinhalt in Echtzeit die Fingerabdruckinformationen in regelmäßigen Intervallen aus dem Rundfunkinhalt zu extrahieren.

11. Verfahren zum Bereitstellen inhaltsbezogener Informationen, wobei das Verfahren von einem System zum Bereitstellen inhaltsbezogener Informationen in Bezug auf Rundfunkinhalt durchgeführt wird, der einem Client-Endgerät (200) mit einer Anzeigeeinheit (210), einer Rundfunkempfangseinrichtung (220) und einer Netzverbindungseinrichtung (230) durch einen Rundfunkkanal bereitgestellt wird, wobei das Verfahren umfasst:
1) Extrahieren von Fingerabdruckinformationen aus Rundfunkinhalt, der durch einen Rundfunkkanal bereitzustellen ist;
2) Bestimmen von dem Client-Terminal während einer durch den Rundfunkkanal bereitgestellten Rundfunksendung bereitzustellenden inhaltsbezogenen Informationen durch Bestimmen, ob der zuvor gespeicherte Rundfunkinhalt per Rundfunk gesendet wird, mittels Vergleichen von Fingerabdruckinformationen über Rundfunkinhalt mit den Fingerabdruckinformationselementen, die den zuvor gespeicherten Rundfunkinhaltselementen entsprechen, und durch Bestimmen der entsprechend dem per Rundfunk gesendeten Rundfunkinhalt gespeicherten inhaltsbezogenen Informationen als dem Client-Endgerät bereitzustellende inhaltsbezogene Informationen und
3) Übertragen der bestimmten inhaltsbezogenen Informationen, aus Rundfunkinhalt extrahierten Fingerabdruckinformationen, die den bestimmten inhaltsbezogenen Informationen entsprechen, und Rundfunkkanalidentifikationsinformationen über den bestimmten inhaltsbezogenen Informationen entsprechenden Rundfunkinhalt an das Client-Endgerät,
wobei das Client-Endgerät eine Fingerabdruckextraktionseinheit (250) zum kontinuierlichen Extrahieren von Fingerabdruckinformationen aus dadurch empfangenem Rundfunkinhalt in Echtzeit aufweist,
wobei das Client-Endgerät Rundfunkkanalidentifikationsinformationen der Rundfunksendung, die das Client-Endgerät aktuell durch die Rundfunkempfangseinrichtung empfängt, von einem Kanalinformationsidentifikations-Server (400) auf Basis der Fingerabdruckinformationen erhält und
wobei das Client-Endgerät Steuerung durchführt, so dass die empfangenen inhaltsbezogenen Informationen auf einer Anzeigeeinheit angezeigt werden, wenn die von dem System empfangenen Rundfunkkanalidentifikationsinformationen mit den erhaltenen Rundfunkkanalidentifikationsinformationen identisch sind und die von dem System empfangenen Fingerabdruckinformationen mit den durch der Fingerabdruckextraktionseinheit extrahierten Fingerabdruckinformationen identisch sind.

12. Verfahren nach Anspruch 11, wobei die Fingerabdruckextraktionseinheit (250) konfiguriert ist, um zum kontinuierlichen Extrahieren der Fingerabdruckinformationen aus dem Rundfunkinhalt in Echtzeit die Fingerabdruckinformationen in regelmäßigen Intervallen aus dem Rundfunkinhalt zu extrahieren.

## Revendications

1. Système de fourniture d'informations liées au contenu, le système fournissant des informations liées au contenu se rapportant à un contenu de diffusion fourni à un terminal client (200) ayant une unité d'affichage (210), moyen de réception de diffusion (220), et un moyen de connexion de réseau (230) par le biais d'un canal de diffusion, comprenant :
une unité de gestion d'informations liées au contenu (110) destinée à mémoriser des informations liées au contenu correspondant à un contenu de diffusion précédemment désigné et des éléments d'informations d'empreintes digitales se rapportant au contenu de diffusion précédemment désigné à fournir au terminal client ;
une unité d'extraction d'empreintes digitales (120) destinée à extraire des informations d'empreintes digitales du contenu de diffusion à fournir par le biais du canal de diffusion ;
une unité de détermination de fourniture d'informations liées au contenu (130) destinée à déterminer des informations liées au contenu à fournir au terminal client dans lequel, durant la diffusion assurée par le biais du canal de diffusion, l'unité de fourniture d'informations liées au contenu est agencée pour déterminer que le contenu de diffusion mémorisé dans l'unité de gestion d'informations liées au contenu est en cours de diffusion en comparant les informations d'empreintes digitales du contenu de diffusion à des éléments d'informations d'empreintes digitales correspondant à des parties de contenu de diffusion précédemment mémorisées dans l'unité de gestion d'informations liées au contenu et l'unité de détermination de fourniture d'informations liées au contenu détermine les informations liées au contenu mémorisées en correspondance avec le contenu de diffusion en cours de diffusion en tant qu'informations liées au contenu à fournir au terminal client ; et
une unité de transmission d'informations liées au contenu (140) destinée à transmettre les informations liées au contenu déterminées par l'unité de détermination de fourniture d'informations liées au contenu et les informations d'empreintes digitales extraites du contenu de diffusion correspondant aux informations liées au contenu déterminées et des informations d'identification de canal de diffusion relatives au contenu de diffusion correspondant aux informations liées au contenu déterminées par l'unité de détermination de fourniture d'informations liées au contenu au terminal client sur un réseau,
dans lequel le terminal client comprend :
une unité d'extraction d'empreintes digitales (250) destinée à extraire continûment, en temps réel, des informations d'empreintes digitales du contenu de diffusion reçu par celle-ci ;
une unité d'identification de canal de diffusion (240) destinée à obtenir des informations d'identification de canal de diffusion de la diffusion que le terminal client reçoit actuellement par le biais du moyen de réception de diffusion depuis un serveur d'identification d'informations de canal (400) en fonction des informations d'empreintes digitales ; et
une unité d'affichage d'informations liées au contenu (260) destinée à exécuter une commande de telle sorte que les informations liées au contenu reçues soient affichées sur une unité d'affichage si les informations d'identification de canal de diffusion reçues depuis l'unité de transmission d'informations liées au contenu sont identiques aux informations d'identification de canal de diffusion obtenues par l'unité d'identification de canal de diffusion et les informations d'empreintes digitales reçues depuis l'unité de transmission d'informations liées au contenu sont identiques aux informations d'empreintes digitales extraites par l'unité d'extraction d'empreintes digitales.

2. Système selon la revendication 1, dans lequel les informations d'empreintes digitales transmises par l'unité de transmission d'informations liées au contenu au terminal client sont des informations d'empreintes digitales relatives à au moins une partie du contenu de diffusion correspondant aux informations liées au contenu déterminées par l'unité de détermination de fourniture d'informations liées au contenu.

3. Système selon la revendication 2, dans lequel les informations d'empreintes digitales sont des informations d'empreintes digitales comprises dans une période de temps prédéterminée allant d'un point de départ du contenu de diffusion correspondant aux informations liées au contenu déterminées par l'unité de détermination de fourniture d'informations liées au contenu.

4. Système selon la revendication 1, dans lequel l'unité d'affichage d'informations liées au contenu est agencée pour mémoriser des éléments d'informations d'empreintes digitales du terminal client pendant une période de temps prédéfinie, et exécuter une commande de telle sorte que s'il existe une partie identique entre les informations d'empreintes digitales reçues depuis l'unité de transmission d'informations liées au contenu et les informations d'empreintes digitales mémorisées, les informations liées au contenu reçues soient affichées sur l'unité d'affichage.

5. Système selon la revendication 1, dans lequel :
l'unité d'identification de canal de diffusion du terminal client est agencée pour extraire des informations d'empreintes digitales d'une diffusion reçue par le biais du moyen de réception de diffusion, et transmet les informations d'empreintes digitales extraites à un serveur d'identification d'informations de canal,
le serveur d'identification d'informations de canal est agencé pour identifier des informations de canal relatives à la diffusion actuellement reçue par le terminal client en fonction des informations d'empreintes digitales reçues depuis l'unité d'identification du canal de diffusion du terminal client, et transmet les informations de canal identifiées au terminal client, et
l'unité d'identification de canal de diffusion du terminal client est agencée pour obtenir des informations d'identification relatives au canal de diffusion sur lequel le terminal client reçoit la diffusion, en fonction des informations du canal relatives à la diffusion reçue depuis le serveur d'identification d'informations de canal.

6. Système selon la revendication 1, dans lequel le serveur d'identification d'informations de canal est inclus dans le système pour fournir des informations liées au contenu.

7. Système selon la revendication 1, dans lequel le terminal client comprend en outre une unité de traitement d'informations d'utilisateur (270) destinée à recevoir un signal d'entrée d'utilisateur basé sur les informations liées au contenu affichées, et transmettre un signal de demande d'opération supplémentaire en fonction du signal d'entrée reçu au système ou à un dispositif externe séparé.

8. Système selon la revendication 1, dans lequel l'unité d'identification de canal de diffusion du terminal client est agencée pour transmettre des informations de temps tout en transmettant les informations d'empreintes digitales au serveur d'identification d'informations de canal, et
le serveur d'identification d'informations de canal est agencé pour comparer des informations de temps absolu du système de fourniture d'informations liées au contenu à des informations de temps reçues depuis le terminal client, afin d'obtenir des informations relatives à un décalage temporel entre des images diffusées du terminal client et du système de fourniture d'informations liées au contenu, et transmettre les informations de décalage temporel au terminal client.

9. Système selon la revendication 1, dans lequel :
l'unité de transmission d'informations liées au contenu est agencée pour transmettre les informations de temps absolu, ainsi que des informations liées au contenu, au terminal client, et
le terminal client est agencé pour afficher les informations liées au contenu en fonction des informations de temps absolu reçues et des informations de décalage de temps entre les images diffusées.

10. Système selon l'une quelconque des revendications 1 à 9, dans lequel, pour extraire continûment les informations d'empreintes digitales du contenu de diffusion en temps réel, l'unité d'extraction d'empreintes digitales (250) est configurée pour extraire les informations d'empreintes digitales du contenu de diffusion à intervalles réguliers.

11. Procédé de fourniture d'informations liées au contenu, le procédé étant exécuté par un système de fourniture d'informations liées au contenu se rapportant à un contenu de diffusion fourni par le biais d'un canal de diffusion à un terminal client (200) ayant une unité d'affichage (210), moyen de réception de diffusion (220), et un moyen de connexion de réseau (230), le procédé comprenant :
1) l'extraction d'empreintes digitales du contenu de diffusion à fournir par le biais d'un canal de diffusion ;
2) la détermination d'informations liées au contenu à fournir au terminal client durant une diffusion fournie par le biais du canal de diffusion, en déterminant que le contenu de diffusion mémorisé précédemment est en cours de diffusion par comparaison d'informations d'empreintes digitales du contenu de diffusion à des éléments d'informations d'empreintes digitales correspondant aux parties de contenu de diffusion précédemment mémorisées et en déterminant les informations liées au contenu mémorisées en correspondance avec le contenu de diffusion en cours de diffusion en tant qu'informations liées au contenu à fournir au terminal client ; et
3) la transmission des informations liées au contenu déterminées, d'informations d'empreintes digitales extraites du contenu de diffusion correspondant aux informations liées au contenu déterminées et d'informations d'identification de canal de diffusion relatives au contenu de diffusion correspondant aux informations liées au contenu déterminé au terminal client,
dans lequel le terminal client comprend une unité d'extraction d'empreintes digitales (250) destinée à extraire continûment, en temps réel, des informations d'empreintes digitales du contenu de diffusion reçu par celle-ci ;
dans lequel le terminal client obtient des informations d'identification de canal de diffusion de la diffusion que le terminal client reçoit actuellement par le biais du moyen de réception de diffusion depuis un serveur d'identification d'informations de canal (400) en fonction des informations d'empreintes digitales ; et
dans lequel le terminal client exécute une commande de telle sorte que les informations liées au contenu reçues soient affichées sur une unité d'affichage si les informations d'identification de canal de diffusion reçues depuis le système sont identiques aux informations d'identification de canal de diffusion obtenues et les informations d'empreintes digitales reçues depuis le système sont identiques aux informations d'empreintes digitales extraites par l'unité d'extraction d'empreintes digitales.

12. Procédé selon la revendication 11, dans lequel, pour extraire continûment les informations d'empreintes digitales du contenu de diffusion en temps réel, l'unité d'extraction d'empreintes digitales (250) est configurée pour extraire les informations d'empreintes digitales du contenu de diffusion à intervalles réguliers.
